# EUROPÄISCHE PATENTSCHRIFT

(11) **EP 2 957 488 B1**
(45) Veröffentlichungstag und Bekanntmachung des Hinweises auf die Patenterteilung: **12.02.2020**
(21) Anmeldenummer: 14198020.1
(22) Anmeldetag: 15.12.2014
(51) Int. Cl.: B62D 59/04

(54) **Hilfsantrieb für einen Anhänger und Anhänger**
Auxiliary drive unit for a trailer
Unité de propulsion auxiliaire pour remorque

(30) Priorität: 31.03.2014 DE 202014101524 U
(43) Veröffentlichungstag der Anmeldung: 23.12.2015
(73) Patentinhaber: Reich KG, Regel- und Sicherheitstechnik, 35713 Eschenburg-Wissenbach (DE)
(72) Erfinder: Bender, Steffen, 35713 Eschenburg (DE)
(74) Vertreter: Hofstetter, Schurack & Partner

(56) Entgegenhaltungen:
- EP-A1- 1 764 274
- WO-A1-2011/131194
- DE-U1-202014 100 738
- FR-A1- 2 965 539
- GB-A- 2 457 725

## Beschreibung

Die vorliegende Erfindung betrifft einen Hilfsantrieb für einen Anhänger, insbesondere einen Wohnwagen, einen Bootsanhänger, einen Verkaufswagen, einen Transportanhänger oder einen Autotransportanhänger, wobei der Hilfsantrieb an einem Rahmen des Anhängers angeordnet ist und mindestens ein Antriebselement umfasst, wobei das Antriebselement mit einem Rad des Anhängers in Eingriff bringbar ist. Die Erfindung betrifft weiterhin einen Anhänger mit mindestens einem Hilfsantrieb sowie ein Schmutzfangelement.

Hilfsantriebe für Anhänger, insbesondere für Wohnwagen, Bootsanhänger, Verkaufswagen, Transportanhänger und ähnliche Anhänger sind in einer großen Vielzahl bekannt. Sie dienen insbesondere dazu, den Anhänger in abgekoppeltem Zustand zu bewegen. Dies betrifft insbesondere Anhänger, die beispielsweise auf Campingplätzen oder Wohnwagen-Parkplätzen bewegt und rangiert werden müssen. Bei diesen bekannten Hilfsantrieben ist mindestens ein Antriebselement, insbesondere eine Antriebswalze mit einem Rad des Anhängers in Eingriff bringbar. Mithilfe entsprechender Antriebseinheiten, zum Beispiel Elektromotoren, wird die Antriebswalze angetrieben, wodurch sich das mit der Antriebswalze in Eingriff befindliche Rad des Anhängers dreht beziehungsweise bewegt. Damit ist ein sicheres Rangieren des Anhängers in abgekoppeltem Zustand möglich.

Bei Anhängern bestimmter Gewichtsklassen ist es vorgeschrieben, diese mit einem so genannten "Spritzschutzsystem" auszurüsten. Ein derartiges Spritzschutzsystem besteht dabei aus einer Radabdeckung, einer Schürze und einem Schmutzfänger. Der Schmutzfänger soll dabei verhindern, dass Steine, Spritzwasser und Schmutz von den Rädern des Anhängers auf nachfolgende Fahrzeuge geschleudert werden. Nachteilig an den bekannten Hilfsantrieben ist jedoch, dass bei der Montage der entsprechenden Antriebseinheiten des Hilfsantriebs hinter einer Achse des Anhängers der vorgeschriebene Schmutzfänger nicht montiert werden kann, da er sich zwischen den Antriebswalzen des Hilfsantriebs und den anzutreibenden Rädern des Anhängers befinden würde. Aus der DE 20 2014 100 738 U1 ist ein Rangierantrieb für einen Anhänger bekannt, wobei der Rangierantrieb einen Antriebsmotor, eine Antriebsrolle für ein Rad des Anhängers und einen Spritzschutz aufweist, wobei der Spritzschutz mit dem Rangierantrieb zu einer Baugruppe integriert ist. Des Weiteren kann der Spritzschutz mit einer Öffnung für die Antriebsrolle versehen sein. Nachteilig an diesem Rangierantrieb ist jedoch, dass durch die Öffnung für die Antriebsrolle, die im Fahrbetrieb, d.h. mit von dem Rad zurückgezogener Antriebsrolle, frei liegt, weiterhin Steine, Spritzwasser und Schmutz von den Rädern des Anhängers dringen können und auf nachfolgende Fahrzeuge geschleudert werden. Zudem besteht die Gefahr, dass der Rangierantrieb selbst durch die durch die Öffnung in dem Spritzschutz im Fahrbetrieb hindurch geschleuderten Steine oder Schmutz oder durch Spritzwasser beschädigt wird. Die in der DE 20 2014 100 738 U1 offenbarten Merkmale sind im Oberbegriff des Anspruchs 1 beschrieben

Es ist daher Aufgabe der vorliegenden Erfindung, einen gattungsgemäßen Hilfsantrieb für einen Anhänger, insbesondere einen Wohnwagen, einen Bootsanhänger, einen Verkaufswagen, einen Transportanhänger oder einen Autotransportanhänger, einen gattungsgemäßen Anhänger mit mindestens einem Hilfsantrieb sowie ein Schmutzfangelement bereitzustellen, durch die ein sicherer Spritzschutz im Fahrbetrieb des Anhängers und gleichzeitig eine sichere Rangierfunktion gewährleistet ist.

Zur Lösung dieser Aufgaben dienen ein Hilfsantrieb mit den Merkmalen des Anspruchs 1 und ein Anhänger mit den Merkmalen des Anspruchs 9. Vorteilhafte Ausgestaltungen mit zweckmäßigen Weiterbildungen der Erfindung sind in den Unteransprüchen angegeben, wobei vorteilhafte Ausgestaltungen des Hilfsantriebs als vorteilhafte Ausgestaltungen der erfindungsgemäßen Anhänger und umgekehrt anzusehen sind.

Ein erster Aspekt der Erfindung betrifft einen Hilfsantrieb für einen Anhänger, insbesondere für einen Wohnwagen, einen Bootsanhänger, einen Verkaufswagen, einen Transportanhänger, einen Autotransportanhänger oder ähnliche Anhänger, wobei der Hilfsantrieb an einem Rahmen des Anhängers angeordnet ist und mindestens ein Antriebselement, welches mit einem Rad des Anhängers in Eingriff bringbar ist, umfasst. Des Weiteren umfasst der Hilfsantrieb mindestens ein Schmutzfangelement, wobei das Schmutzfangelement mit dem Anhänger verbunden ist und mindestens eine Öffnung und/oder Aussparung umfasst, durch die der Hilfsantrieb führbar ist. Eine derartige erfindungsgemäße Konstruktion ermöglicht es einerseits, insbesondere bereits montierte Hilfsantriebe mit einem Schmutzfangelement nachzurüsten oder bereits montierte Schmutzfangelemente an einen nachträglich einzubauenden Hilfsantrieb anzupassen. Die Innenkontur der Öffnung und/oder der Aussparung in dem Schmutzfangelement ist dabei vorteilhafterweise der Außenkontur des Hilfsantriebs angepasst, sodass der Hilfsantrieb, beispielsweise ein Gehäuse des Hilfsantriebs, beim Anpressen an das Rad des Anhängers oder bei einem entsprechenden Abschwenken von dem Rad durch diese hindurch geführt werden kann. Zugleich deckt der Hilfsantrieb in abgeschwenktem Zustand, d.h. im Fahrbetrieb, die Öffnung und/oder Aussparung nahezu vollständig oder vollständig ab, sodass der geforderte sichere Spritzschutz im Fahrbetrieb des Anhängers erreicht wird. Dies bedeutet, dass zumindest im Fahrbetrieb die Innenkontur der Öffnung und/oder der Aussparung in dem Schmutzfangelement der Außenkontur des Hilfsantriebs im Kontaktbereich zwischen der Öffnung und/oder Aussparung und dem Hilfsantrieb angepasst ist. Die Innenkontur der Öffnung und/oder Aussparung kann auch exakt der Außenkontur des Hilfsantriebs im Kontaktbereich zwischen der Öffnung und/oder Aussparung und dem Hilfsantrieb entsprechend ausgebildet sein. Durch die erfindungsgemäße Ausstattung des Hilfsantriebs ist zudem eine sichere Rangierfunktion mittels des Hilfsantriebs gewährleistet. Zur leichteren Hindurchführung des Hilfsantriebs durch die Öffnung und/oder Aussparung des Schmutzfangelements ist dieses im Bereich um die Öffnung und/oder Aussparung aus einem Material gefertigt, welches gute bzw. hohe Gleiteigenschaften besitzt oder kann zumindest teilweise mit einem Material mit hohen Gleiteigenschaften umgeben sein. Des Weiteren besteht die Möglichkeit, dass an der Öffnung und/oder Aussparung zumindest teilweise ein separates Element bestehend aus einem Material mit hohen Gleiteigenschaften angeordnet ist. Dadurch wird vorteilhafterweise das Hindurchführen des Hilfsantriebs durch die Öffnung und/oder Aussparung des Schmutzfangelements deutlich erleichtert. Ein "Hängenbleiben" oder "Verkanten" des Schmutzfangelements beim Hindurchführen des Hilfsantriebs wird zuverlässig verhindert. Dabei ist eine Vielzahl erfindungsgemäßer Ausgestaltungsmöglichkeiten des Schmutzfangelements, der Anzahl der Schmutzfangelemente wie auch der Befestigungsmöglichkeiten des Schmutzfangelements am Anhänger möglich, wie im Folgenden näher ausgeführt wird.

In weiteren vorteilhaften Ausgestaltungen des erfindungsgemäßen Hilfsantriebs besteht die Möglichkeit, dass das Schmutzfangelement im Bereich der Öffnung und/oder der Aussparung zumindest teilweise eine Dichtlippe aufweist oder zumindest teilweise von dieser umgeben ist. Dadurch ist wiederum gewährleistet, dass große Bereiche des Hilfsantriebs, insbesondere die Antriebseinheit des Hilfsantriebs vor Steinen, Spritzwasser und Schmutz geschützt werden. In weiteren vorteilhaften Ausgestaltungen kann das Schmutzfangelement mit dem Rahmen des Anhängers und/oder dem Anhängerboden und/oder dem Radkasten des Anhängers verbunden sein.

In einer vorteilhaften Ausgestaltung des Hilfsantriebs ist das Schmutzfangelement derart ausgebildet, dass ein Freiraum zwischen einem Radkasten und/oder einem Anhängerboden des Anhängers und dem Hilfsantrieb durch das Schmutzfangelement zumindest teilweise abgedeckt ist. Zudem kann die Breite des einzelnen Schmutzfangelementes oder die Breite mehrerer nebeneinander angeordneter Schmutzfangelemente zumindest ungefähr der Breite des gegenüberliegenden Rads bzw. Reifens des Anhängers entsprechen. Dadurch wird zuverlässig verhindert, dass Steine, Spritzwasser und Schmutz von dem entsprechenden Rad bzw. Reifen des Anhängers auf nachfolgende Fahrzeuge geschleudert werden. Es ist aber auch möglich, dass das Schmutzfangelement derart ausgebildet ist, dass ein Freiraum unterhalb des Hilfsantriebs in Richtung der Fahrbahn zumindest teilweise durch das Schmutzfangelement abgedeckt ist. Des Weiteren besteht die Möglichkeit, dass das Schmutzfangelement derart ausgebildet ist, dass sowohl der Freiraum zwischen dem Radkasten des Anhängers und dem Hilfsantrieb sowie der Freiraum unterhalb des Hilfsantriebs jeweils zumindest teilweise durch das Schmutzfangelement abgedeckt sind. Auch durch derartige Ausgestaltungen lässt sich zuverlässig verhindern, dass im normalen Fahrbeziehungsweise Straßenbetrieb des Anhängers Steine, Spritzwasser und Schmutz von den Rädern des Anhängers auf nachfolgende Fahrzeuge geschleudert werden.

In weiteren vorteilhaften Ausgestaltungen des erfindungsgemäßen Hilfsantriebs weist der Hilfsantrieb mindestens eine Antriebseinheit zum Antrieb des mindestens einen Antriebselements auf, wobei das Schmutzfangelement im Bereich zwischen der Antriebseinheit und dem Antriebselement, insbesondere einer Antriebswalze oder -rolle, angeordnet ist. Eine derartige Anordnung des Schmutzfangelements erweist sich als besonders vorteilhaft, da einerseits gewährleistet ist, dass das Schmutzfangelement nicht zwischen das Antriebselement und das mit dem Antriebselement in Eingriff zu bringende Rad des Anhängers ragt und andererseits die Positionierung des Hilfsantriebs an dem Rahmen des Anhängers in üblicher Weise durchgeführt werden kann. Dabei besteht zudem die Möglichkeit, dass das Schmutzfangelement derart ausgebildet ist, dass die Antriebseinheit des Hilfsantriebs gegenüber dem Rad zumindest teilweise abgeschirmt ist. Dabei kann das Schmutzfangelement die Antriebseinheit des Hilfsantriebs zumindest teilweise umschließen. Vorteilhafterweise werden durch diese Ausführungsformen des Schmutzfangelements die Antriebseinheit und sämtliche mechanischen und elektronischen Komponenten, wie beispielsweise Motoren, Anschwenkmotoren und -führungen sowie die Steuerelektronik des Hilfsantriebs vor der Gischt beziehungsweise dem Spritzwasser der Räder des Anhängers geschützt.

In weiteren vorteilhaften Ausgestaltungen des erfindungsgemäßen Hilfsantriebs ist ein in den Radkasten des Anhängers ragender Bereich des Schmutzfangelements zumindest bereichsweise einer Kontur der Innenseite des Radkastens in diesem Bereich angepasst. Dabei besteht die Möglichkeit, dass der in den Radkasten ragende Bereich des Schmutzfangelements bei einem Nichtanliegen des Antriebselements an dem Rad an der Innenkontur des Radkastens in diesem Bereich vollflächig anliegt. Vorteilhafterweise ist das Schmutzfangelement des Hilfsantriebs zumindest bereichsweise der Innenkontur des Radkastens in diesem Bereich angepasst, sodass nach einem Abschwenken des Antriebselements von dem anzutreibenden Rad sich das Schmutzfangelement an die Innenkontur des Radkastens anschmiegt und somit einen optimalen Spritzschutz gewährleistet.

In einer weiteren vorteilhaften Ausgestaltung des erfindungsgemäßen Hilfsantriebs ist zumindest ein in einen Radkasten des Anhängers ragender Bereich des Schmutzfangelements oder ein an einem Anhängerboden anliegender Bereich des Schmutzfangelements zumindest bereichsweise flexibler ausgebildet als die am Hilfsantrieb anliegenden Bereiche des Schmutzfangelements und/oder als ein von dem Hilfsantrieb bodenseitig abragender Bereich des Schmutzfangelements. Dadurch ist es vorteilhafterweise möglich, dass sich der genannte Bereich des Schmutzfangelements beim Abschwenken des Hilfsantriebs dem Radkasten des Anhängers anpasst beziehungsweise sich an dessen Innenkontur anschmiegt und somit wiederum einen optimalen Spritzschutz gewährleistet.

In weiteren vorteilhaften Ausgestaltungen des erfindungsgemäßen Hilfsantriebs ist das Schmutzfangelement als separates Bauteil ausgebildet und am Hilfsantrieb angeordnet. Dadurch ergibt sich vorteilhafterweise die Möglichkeit bereits bestehende Hilfsantriebe mit dem Schmutzfangelement nachzurüsten.

In weiteren vorteilhaften Ausgestaltungen des erfindungsgemäßen Hilfsantriebs kann das Schmutzfangelement ein- oder mehrteilig ausgebildet sein. Vorteilhafterweise kann sich die Ausgestaltung des Schmutzfangelements nach den Gegebenheiten im Bereich der Räder beziehungsweise der Radkästen des Anhängers oder der Kontur des Anhängerbodens in diesem Bereich richten.

In weiteren vorteilhaften Ausgestaltungen des erfindungsgemäßen Hilfsantriebs besteht das Schmutzfangelement aus Kunststoff, Metall, Gummi oder einer Kombination von mindestens zwei dieser Materialien. Auch andere Materialien zur Herstellung des Schmutzfangelements sind denkbar.

In einer weiteren vorteilhaften Ausgestaltung des erfindungsgemäßen Hilfsantriebs ist mindestens ein weiteres am Anhänger angeordnetes Schmutzfangelement im Bereich des Hilfsantriebs angeordnet. Diese erfindungsgemäße Ausführungsform ist insbesondere bei Anhängern mit sehr breiten Reifen vorteilhaft, da mindestens ein zusätzliches Schmutzfangelement am Anhänger befestigt ist um in der abgeschwenkten Position des Hilfsantriebs einen ausreichend breiten Spritzschutz zu gewährleisten. Dabei kann das zusätzliche Schmutzfangelement an dem Rahmen des Anhängers, dem Radkasten des Anhängers, dem Anhängerboden oder anderen Bauelementen des Anhängers in diesem Bereich montiert sein. Das zusätzliche Schmutzfangelement kann dabei neben dem Schmutzfangelement des Hilfsantriebs angeordnet sein, das heißt es kann in Richtung einer Mitte des Anhängers oder in Richtung der Außenseite des Anhängers neben dem Schmutzfangelement des Hilfsantriebs montiert werden. Dabei können natürlich zusätzlich zu dem Schmutzfangelement des Hilfsantriebs für jedes Rad des Anhängers jeweils ein zusätzliches inneres und ein äußeres Schmutzfangelement am Anhänger angeordnet sein.

Ein zweiter Aspekt der Erfindung betrifft weiterhin einen Anhänger, insbesondere Wohnwagen, Bootsanhänger, Verkaufswagen, Transportanhänger oder Autotransportanhänger, umfassend mindestens einen Hilfsantrieb wie im Vorhergehenden beschrieben. Die unterschiedlichen Ausführungsformen und deren Vorteile ergeben sich aus den vorhergehenden Ausführungen zur erfindungsgemäßen Ausgestaltung des Hilfsantriebs.

Insbesondere betrifft der zweite Aspekt der Erfindung einen Anhänger, insbesondere Wohnwagen, Bootsanhänger, Verkaufswagen, Transportanhänger oder Autotransportanhänger, umfassend einen Stützrahmen und mindestens einen am Stützrahmen angeordneten Hilfsantrieb mit mindestens einem Antriebselement, wobei das Antriebselement mit einem Rad des Anhängers in Eingriff bringbar ist und mindestens ein im Bereich des Hilfsantriebs mit dem Anhänger verbundenes Schmutzfangelement. Das Schmutzfangelement umfasst dabei mindestens eine Öffnung und/oder Aussparung, wobei der Hilfsantrieb durch die Öffnung und/oder Aussparung führbar ist. Eine derartige erfindungsgemäße Konstruktion ermöglicht es, insbesondere Anhänger mit bereits montierten Hilfsantrieben mit entsprechenden Schmutzfangelementen nachzurüsten. Die Öffnung und/oder die Aussparung in dem Schmutzfangelement ist dabei vorteilhafterweise der Außenkontur des Hilfsantriebs angepasst, sodass der Hilfsantrieb beim Anpressen an das Rad des Anhängers durch diese hindurch geführt werden kann. Zugleich deckt der Hilfsantrieb in abgeschwenktem Zustand, d.h. im Fahrbetrieb des Anhängers, die Öffnung und/oder Aussparung nahezu vollständig oder vollständig ab, sodass der geforderte sichere Spritzschutz im Fahrbetrieb des Anhängers zuverlässig erreicht wird. Dies bedeutet, dass zumindest im Fahrbetrieb die Innenkontur der Öffnung und/oder der Aussparung in dem Schmutzfangelement der Außenkontur des Hilfsantriebs im Kontaktbereich zwischen der Öffnung und/oder Aussparung und dem Hilfsantrieb angepasst ist. Die Innenkontur der Öffnung und/oder Aussparung kann auch exakt der Außenkontur des Hilfsantriebs im Kontaktbereich zwischen der Öffnung und/oder Aussparung und dem Hilfsantrieb entsprechend ausgebildet sein. Durch die erfindungsgemäße Ausstattung des Hilfsantriebs mit mindestens einem Schmutzfangelement ist zudem eine sichere Rangierfunktion mittels des Hilfsantriebs gewährleistet.

In weiteren vorteilhaften Ausgestaltungen des erfindungsgemäßen Anhängers besteht die Möglichkeit, dass das Schmutzfangelement im Bereich der Öffnung und/oder der Aussparung zumindest teilweise eine Dichtlippe aufweist oder zumindest teilweise von dieser umgeben ist. Dadurch ist wiederum gewährleistet, dass große Bereiche des Hilfsantriebs, insbesondere die Antriebseinheit des Hilfsantriebs vor Steinen, Spritzwasser und Schmutz geschützt wird. Zur leichteren Hindurchführung des Hilfsantriebs durch die Öffnung und/oder Aussparung des Schmutzfangelements kann dieses im Bereich um die Öffnung und/oder Aussparung aus einem Material gefertigt sein, welches gute bzw. hohe Gleiteigenschaften besitzt oder kann zumindest teilweise mit einem Material mit hohen Gleiteigenschaften umgeben sein. Des Weiteren besteht die Möglichkeit, dass an der Öffnung und/oder Aussparung zumindest teilweise ein separates Element bestehend aus einem Material mit hohen Gleiteigenschaften angeordnet ist. Dadurch wird vorteilhafterweise das Hindurchführen des Hilfsantriebs durch die Öffnung und/oder Aussparung des Schmutzfangelements deutlich erleichtert. Ein "Hängenbleiben" oder "Verkanten" des Schmutzfangelements beim Hindurchführen des Hilfsantriebs wird zuverlässig verhindert. In weiteren vorteilhaften Ausgestaltungen kann das Schmutzfangelement mit dem Rahmen des Anhängers und/oder dem Anhängerboden und/oder dem Radkasten des Anhängers verbunden sein.

Die sich aus der Verwendung des Hilfsantriebs gemäß dem ersten Erfindungsaspekt ergebenden Merkmale und Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

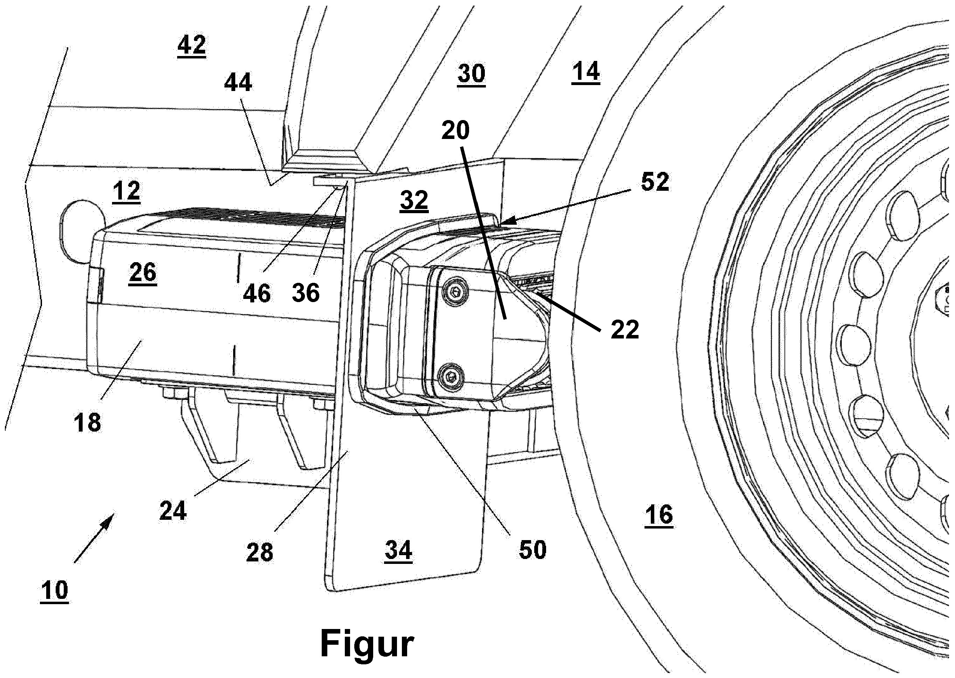

Weitere Vorteile, Merkmale und Einzelheiten der Erfindung ergeben sich aus der nachfolgenden Beschreibung mehrerer Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen, oder in Alleinstellung verwendbar, ohne den Rahmen der Erfindung zu verlassen.

Die Figur zeigt eine schematische Darstellung eines erfindungsgemäßen Hilfsantriebs 10 für einen Anhänger, insbesondere einen Wohnwagen. Unter Anhänger werden aber zudem beispielsweise Bootsanhänger, Verkaufswagen, Transportanhänger oder Autotransportanhänger und ähnliche Anhänger verstanden. Man erkennt, dass der Hilfsantrieb 10 an einem Rahmen 12 des Anhängers mittels einer Montagevorrichtung 24 angeordnet ist. In dem dargestellten Ausführungsbeispiel ist der Hilfsantrieb 10 an einem Längsträger des Rahmens 12 befestigt.

Der Hilfsantrieb 10 umfasst dabei eine Antriebseinheit 18 und ein Antriebselement 22, wobei das Antriebselement 22 als Antriebswalze ausgebildet ist. Das Antriebselement 22 ist in einer Gehäusehalterung 20 drehbar gelagert. In der Figur ist der Hilfsantrieb 10 in einem zugeschwenkten Zustand dargestellt. Dies bedeutet, dass das Antriebselement 22 in Eingriff mit einem Rad 16 des Anhängers steht. Durch eine Drehung des Antriebselements 22 wird das Rad 16 bewegt. Die Antriebseinheit 18 umfasst zudem elektronische und elektrische Komponenten des Hilfsantriebs 10, wie zum Beispiel den Motor für das Antriebselement 22 sowie Anschwenkmotoren und -führungen sowie die Steuerelektronik des Hilfsantriebs 10 (nicht dargestellt). Die zuletzt genannten Komponenten sind innerhalb eines Gehäuses 26 des Hilfsantriebs 10 angeordnet. Das An- und Abschwenken des Antriebselements 22 erfolgt durch ein entsprechendes Verschieben des Hilfsantriebs 10 relativ zum Rahmen 12 des Anhängers.

Des Weiteren erkennt man, dass am Hilfsantrieb 10 ein Schmutzfangelement 28 angeordnet ist. In dem dargestellten Ausführungsbeispiel ist dabei das Schmutzfangelement 28 derart ausgebildet, dass zumindest ein Freiraum zwischen einem Radkasten 14, insbesondere einer Innenseite 30 des Radkastens 14 bzw. einem Anhängerboden 44 des Anhängers und dem Hilfsantrieb 10 durch einen oberen Bereich 32 des Schmutzfangelements 28 abgedeckt ist. Des Weiteren ist das Schmutzfangelement 28 derart ausgebildet, dass ein weiterer Freiraum unterhalb des Hilfsantriebs 10, das heißt in Richtung einer Fahrbahndecke oder einem Boden ebenfalls zumindest teilweise durch einen unteren Bereich 34 des Schmutzfangelements 28 abgedeckt ist.

Das Schmutzfangelement 28 ist in seinem oberen Bereich 36 über eine Befestigungsvorrichtung 46 mit einem Chassis 42 beziehungsweise dem Anhängerboden 44 lösbar verbunden. Das Schmutzfangelement 28 ist wiederum als separates Bauteil ausgebildet und weist eine Öffnung beziehungsweise Aussparung 52 auf, die derart ausgebildet ist, dass der Hilfsantrieb 10 durch sie führbar ist. Dabei entspricht die Innenkontur der Aussparung 52 im Wesentlichen einer Außenkontur des Hilfsantriebs 10 im Kontaktbereich zwischen der Aussparung 52 und dem Hilfsantrieb 10. Man erkennt, dass das Schmutzfangelement 28 in einem vorderen Bereich der Antriebseinheit 18 in Richtung des Antriebselements 22 angeordnet ist. Dadurch wird die Antriebseinheit 18 zuverlässig gegenüber dem Rad 16 abgeschirmt, sodass die entsprechenden Komponenten der Antriebseinheit 18 sicher vor Spritzwasser, Schmutz oder dergleichen aus dem Bereich des Rads 16 geschützt sind.

Des Weiteren ist erkennbar, dass die Öffnung beziehungsweise Aussparung 52 zumindest teilweise mit einer Dichtlippe 50 umgeben ist. Im abgeschwenkten Zustand des Hilfsantriebs 10 wird die Öffnung 52 vollständig durch den Hilfsantrieb 10 beziehungsweise die in diesem Bereich angeordneten Bauelemente des Hilfsantriebs 10 abgedeckt. In zugeschwenkten Zustand des Hilfsantriebs 10 wird die Öffnung 52 zumindest teilweise durch den Hilfsantrieb 10 beziehungsweise die in diesem Bereich angeordneten Bauelemente des Hilfsantriebs 10 abgedeckt. Zustand Diese Ausführungsform eignet sich insbesondere für einen nachträglichen Einbau des Schmutzfangelements 28 bei bestehendem Hilfsantrieb 10.

Das in der Figur gezeigte Schmutzfangelement 28 kann auch mehrteilig, zum Beispiel zweiteilig ausgebildet sein. Dabei kann ein oberes Schmutzfangelement mit dem Anhänger wie beschrieben verbunden sein und den Freiraum zwischen dem Anhängerboden oder einer Innenseite des Radkastens und der Oberseite, d.h. der dem Anhängerboden zugewandten Seite des Hilfsantriebs 10 zumindest teilweise abdecken. An der von dem Anhängerboden abgewandten Seite, d.h. der Unterseite des Hilfsantriebs 10 ist ein entsprechendes unteres Schmutzfangelement angeordnet und deckt zumindest teilweise den Freiraum zwischen der Unterseite des Hilfsantriebs 10 und dem Boden ab. Die Öffnung beziehungsweise Aussparung 52 kann dabei ganz oder jeweils teilweise in dem oberen oder unteren Schmutzfangelement ausgebildet sein.

Unter einem abgeschwenkten Zustand des Hilfsantriebs 10 wird derjenige Zustand verstanden, in dem das Antriebselement 22, das heißt die Antriebswalze nicht mehr im Eingriff mit der Oberfläche des Rads beziehungsweise Reifens 16 steht. Im abgeschwenkten Zustand des Hilfsantriebs 10 kann der Anhänger an ein Zugfahrzeug angekoppelt werden und entsprechend bewegt werden.

Die im Vorhergehenden beschriebenen Schmutzfangelemente 28 bestehen üblicherweise aus Kunststoff, Metall, Gummi oder einer Kombination von mindestens zwei dieser Materialien. Auch andere Materialien sind denkbar.

## Patentansprüche

1. Hilfsantrieb für einen Anhänger, insbesondere einen Wohnwagen, einen Bootsanhänger, einen Verkaufswagen, einen Transportanhänger oder einen Autotransportanhänger, wobei der Hilfsantrieb (10) an einem Rahmen (12) des Anhängers angeordnet ist und mindestens ein Antriebselement (22), welches mit einem Rad (16) des Anhängers in Eingriff bringbar ist, und mindestens ein mit dem Anhänger verbundenes und mindestens eine Öffnung und/oder Aussparung (52) aufweisendes Schmutzfangelement (28) umfasst, wobei der Hilfsantrieb (10) durch die Öffnung und/oder Aussparung (52) führbar ist, wobei eine Innenkontur der Öffnung und/oder Aussparung (52) im Wesentlichen einer Außenkontur des Hilfsantriebs (10) im Kontaktbereich zwischen der Öffnung und/oder Aussparung (52) und dem Hilfsantrieb (10) entsprechend ausgebildet ist, **dadurch gekennzeichnet, dass** das Schmutzfangelement (28) im Bereich der Öffnung und/oder Aussparung (52) zumindest teilweise aus einem Material mit hohen Gleiteigenschaften besteht oder die Öffnung und/oder Aussparung (52) zumindest teilweise mit einem Material mit hohen Gleiteigenschaften umgeben ist oder an der Öffnung und/oder Aussparung (52) zumindest teilweise ein separates Element bestehend aus einem Material mit hohen Gleiteigenschaften angeordnet ist.

2. Hilfsantrieb nach Anspruch 1, **dadurch gekennzeichnet, dass** die Innenkontur der Öffnung und/oder Aussparung (52) der Außenkontur des Hilfsantriebs (10) im Kontaktbereich zwischen der Öffnung und/oder Aussparung (52) und dem Hilfsantrieb (10) entsprechend ausgebildet ist.

3. Hilfsantrieb nach Anspruch 1 oder 2, **dadurch gekennzeichnet, dass** die Öffnung und/oder Aussparung (52) zumindest teilweise mit einer Dichtlippe (50) umgeben ist oder zumindest teilweise eine Dichtlippe (50) aufweist.

4. Hilfsantrieb nach einem der vorhergehenden Ansprüche, **dadurch gekennzeichnet, dass** das Schmutzfangelement (28) mit dem Rahmen (12) des Anhängers und/oder dem Anhängerboden und/oder dem Radkasten (14) des Anhängers verbunden ist.

5. Hilfsantrieb nach Anspruch 1, **dadurch gekennzeichnet, dass** das Schmutzfangelement (28) derart ausgebildet ist, dass ein Freiraum zwischen einem Radkasten (14) und/oder einem Anhängerboden (44) des Anhängers und dem Hilfsantrieb (10) durch das Schmutzfangelement (28) zumindest teilweise abgedeckt ist.

6. Hilfsantrieb nach einem der vorhergehenden Ansprüche, **dadurch gekennzeichnet, dass** der Hilfsantrieb (10) mindestens eine Antriebseinheit (18) zum Antrieb des mindestens einen Antriebselementes (22) aufweist und das Schmutzfangelement (28) im Bereich zwischen der Antriebseinheit (18) und dem Antriebselement (22) angeordnet ist.

7. Hilfsantrieb nach Anspruch 6, **dadurch gekennzeichnet, dass** das Schmutzfangelement (28) derart ausgebildet ist, dass die Antriebseinheit (18) des Hilfsantriebs (10) gegenüber dem Rad (16) zumindest teilweise abgeschirmt ist.

8. Hilfsantrieb nach einem der vorhergehenden Ansprüche, **dadurch gekennzeichnet, dass** das Schmutzfangelement (28) derart ausgebildet ist, dass es die Antriebseinheit (18) des Hilfsantriebs (10) zumindest teilweise umschließt.

9. Anhänger, insbesondere Wohnwagen, Bootsanhänger, Verkaufswagen, Transportanhänger oder Autotransportanhänger, umfassend einen Stützrahmen (12) und mindestens einen am Stützrahmen (12) angeordneten Hilfsantrieb (10) gemäß einem der Ansprüche 1 bis 8.

10. Anhänger nach Anspruch 9, **dadurch gekennzeichnet, dass** das Schmutzfangelement (28) mit dem Rahmen (12) des Anhängers und/oder dem Anhängerboden und/oder dem Radkasten (14) des Anhängers verbunden ist.

11. Anhänger nach Anspruch 9 oder 10, **dadurch gekennzeichnet, dass** das Schmutzfangelement (28) ein- oder mehrteilig ausgebildet ist.

## Claims

1. An auxiliary drive for a trailer, in particular a caravan, a boat trailer, a sales vehicle, a transport trailer or a car transport trailer, wherein the auxiliary drive (10) is arranged at a frame (12) of the trailer and includes at least one drive element (22), which can be engaged with a wheel (16) of the trailer, and at least one dirt trap element (28) connected to the trailer and comprising at least one opening and/or recess (52), wherein the auxiliary drive (10) can be passed through the opening and/or recess (52), wherein an inner contour of the opening and/or recess (52) is formed substantially corresponding to an outer contour of the auxiliary drive (10) in the contact area between the opening and/or recess (52) and the auxiliary drive (10), **characterized in that** the dirt trap element (28) is at least partially composed of a material with high sliding properties in the area of the opening and/or recess (52) or the opening and/or recess (52) are at least partially surrounded by a material with high sliding properties or a separate element composed of a material with high sliding properties is at least partially arranged at the opening and/or recess (52).

2. The auxiliary drive according to claim 1, **characterized in that** the inner contour of the opening and/or recess (52) is formed corresponding to the outer contour of the auxiliary drive (10) in the contact area between the opening and/or recess (52) and the auxiliary drive (10).

3. The auxiliary drive according to claim 1 or 2, **characterized in that** the opening and/or recess (52) are at least partially surrounded by a sealing lip (50) or at least partially comprise a sealing lip (50).

4. The auxiliary drive according to any one of the preceding claims, **characterized in that** the dirt trap element (28) is connected to the frame (12) of the trailer and/or the trailer floor and/or the wheel case (14) of the trailer.

5. The auxiliary drive according to claim 1, **characterized in that** the dirt trap element (28) is formed such that a clearance between a wheel case (14) and/or a trailer floor (44) of the trailer and the auxiliary drive (10) is at least partially covered by the dirt trap element (28).

6. The auxiliary drive according to any one of the preceding claims, **characterized in that** the auxiliary drive (10) comprises at least one drive unit (18) for driving the at least one drive element (22) and the dirt trap element (28) is arranged in the area between the drive unit (18) and the drive element (22).

7. The auxiliary drive according to claim 6, **characterized in that** the dirt trap element (28) is formed such that the drive unit (18) of the auxiliary drive (10) is at least partially shielded with respect to the wheel (16).

8. The auxiliary drive according to any one of the preceding claims, **characterized in that** the dirt trap element (28) is formed such that it at least partially encloses the drive unit (18) of the auxiliary drive (10).

9. A trailer, in particular caravan, boat trailer, sales vehicle, transport trailer or car transport trailer, comprising a support frame (12) and at least one auxiliary drive (10) arranged at the support frame (12) according to any one of claims 1 to 8.

10. The trailer according to claim 9, **characterized in that** the dirt trap element (28) is connected to the frame (12) of the trailer and/or the trailer floor and/or the wheel case (14) of the trailer.

11. The trailer according to claim 9 or 10, **characterized in that** the dirt trap element (28) is formed one- or multi-part.

## Revendications

1. Groupe propulseur auxiliaire pour une remorque, notamment une caravane, une remorque à bateau, une voiture-échoppe, une remorque de transport ou une remorque de transport d'automobile, le groupe propulseur auxiliaire (10) étant disposé sur un châssis (12) de la remorque et comportant au moins un élément d'entraînement (22), qui peut être amené en prise avec une roue (16) de la remorque, et au moins un élément garde-boue (28) relié à la remorque et possédant au moins une ouverture et/ou une cavité (52), le groupe propulseur auxiliaire (10) pouvant passer à travers l'ouverture et/ou la cavité (52), un contour intérieur de l'ouverture et/ou de la cavité (52) étant configuré sensiblement en correspondance avec un contour extérieur du groupe propulseur auxiliaire (10) dans la zone de contact entre l'ouverture et/ou la cavité (52) et le groupe propulseur auxiliaire (10), **caractérisé en ce que** l'élément garde-boue (28), dans la zone de l'ouverture et/ou de la cavité (52), se compose au moins partiellement d'un matériau ayant des propriétés de glissement élevées ou l'ouverture et/ou la cavité (52) est au moins partiellement entourée d'un matériau ayant des propriétés de glissement élevées, ou alors un élément séparé composé d'un matériau ayant des propriétés de glissement élevées est au moins partiellement disposé au niveau de l'ouverture et/ou de la cavité (52).

2. Groupe propulseur auxiliaire selon la revendication 1, **caractérisé en ce que** le contour intérieur de l'ouverture et/ou de la cavité (52) est configuré en correspondance avec le contour extérieur du groupe propulseur auxiliaire (10) dans la zone de contact entre l'ouverture et/ou la cavité (52) et le groupe propulseur auxiliaire (10).

3. Groupe propulseur auxiliaire selon la revendication 1 ou 2, **caractérisé en ce que** l'ouverture et/ou la cavité (52) est au moins partiellement entourée par une lèvre d'étanchéité (50) ou possède au moins partiellement une lèvre d'étanchéité (50).

4. Groupe propulseur auxiliaire selon l'une des revendications précédentes, **caractérisé en ce que** l'élément garde-boue (28) est relié au châssis (12) de la remorque et/ou au plancher de la remorque et/ou au passage de roue (14) de la remorque.

5. Groupe propulseur auxiliaire selon la revendication 1, **caractérisé en ce que** l'élément garde-boue (28) est configuré de telle sorte qu'un espace libre entre un passage de roue (14) et/ou un plancher de remorque (44) de la remorque et le groupe propulseur auxiliaire (10) est au moins partiellement recouvert par l'élément garde-boue (28).

6. Groupe propulseur auxiliaire selon l'une des revendications précédentes, **caractérisé en ce que** le groupe propulseur auxiliaire (10) possède au moins une unité d'entraînement (18) destinée à entraîner l'au moins un élément d'entraînement (22) et l'élément garde-boue (28) est disposé dans la zone entre l'unité d'entraînement (18) et l'élément d'entraînement (22).

7. Groupe propulseur auxiliaire selon la revendication 6, **caractérisé en ce que** l'élément garde-boue (28) est configuré de telle sorte que l'unité d'entraînement (18) du groupe propulseur auxiliaire (10) est au moins partiellement protégée par un écran par rapport à la roue (16).

8. Groupe propulseur auxiliaire selon l'une des revendications précédentes, **caractérisé en ce que** l'élément garde-boue (28) est configuré de telle sorte qu'il entoure au moins partiellement l'unité d'entraînement (18) du groupe propulseur auxiliaire (10).

9. Remorque, notamment caravane, remorque à bateau, voiture-échoppe, remorque de transport ou remorque de transport d'automobile, comprenant un châssis support (12) et au moins un groupe propulseur auxiliaire (10) selon l'une des revendications 1 à 8 disposé sur le châssis support (12).

10. Remorque selon la revendication 9, **caractérisée en ce que** l'élément garde-boue (28) est relié au châssis (12) de la remorque et/ou au plancher de la remorque et/ou au passage de roue (14) de la remorque.

11. Remorque selon la revendication 9 ou 10, **caractérisée en ce que** l'élément garde-boue (28) est réalisé en une ou plusieurs parties.
